# EUROPÄISCHE PATENTSCHRIFT

(11) **EP 3 163 980 B1**
(45) Veröffentlichungstag und Bekanntmachung des Hinweises auf die Patenterteilung: **22.03.2023**
(21) Anmeldenummer: 16195284.1
(22) Anmeldetag: 24.10.2016
(51) Int. Cl.: H05B 45/395, H05B 45/48

(54) **EIN LICHTMODUL UND EIN VERFAHREN ZUM BETREIBEN EINES LICHTMODULS**
A LIGHT MODULE AND A METHOD FOR DRIVING A LIGHT MODULE
UN MODULE LUMINEUX ET UN PROCÉDÉ DE FONCTIONNEMENT D'UN MODULE LUMINEUX

(30) Priorität: 30.10.2015 DE 102015221357
(43) Veröffentlichungstag der Anmeldung: 03.05.2017
(73) Patentinhaber: Marelli Automotive Lighting Reutlingen (Germany) GmbH, 72762 Reutlingen (DE)
(72) Erfinder: BORMANN, Uwe, 89520 Heidenheim (DE); BLUM, Dirk, 72076 Tübingen (DE); NGUENE NJONGUE, Judith, 73054 Eislingen (DE)
(74) Vertreter: DREISS Patentanwälte PartG mbB

(56) Entgegenhaltungen:
- DE-A1-102008 010 320
- DE-A1-102008 021 534
- DE-A1-102009 060 791
- DE-A1-102011 005 582
- US-A1- 2011 062 872
- US-A1- 2014 218 953
- US-A1- 2015 130 861
- Jim Williams: "Application Note 32 High Effi ciency Linear Regulators", , 1 March 1989 (1989-03-01), XP055673638, Retrieved from the Internet: URL:https://www.analog.com/media/en/techni cal-documentation/application-notes/an32f. pdf [retrieved on 2020-03-04]

## Beschreibung

### Stand der Technik

Die Erfindung betrifft ein Lichtmodul nach dem Oberbegriff des Anspruchs 1 und ein Verfahren zum Betreiben eines Lichtmoduls nach einem nebengeordneten Anspruch.

Aus DE 10 2008 010 320 A1 ist bereits ein Lichtmodul gemäß dem Oberbegriff von Anspruch 1 bekannt.

Aus der DE 10 2008 021 534 A1 ist eine Beleuchtungseinrichtung bekannt, bei der einzelne Leuchtdioden oder einzelne Serienschaltungen von Leuchtdioden gesondert zu- und abschaltbar sind. Es ist eine Regelanordnung zum Regeln einer Betriebsspannung in Abhängigkeit von einer an einer Stromquelle anliegenden Spannung vorgesehen.

Aus der DE 10 2011 005 582 A1 ist eine Beleuchtungseinrichtung bekannt, bei der eine Serienschaltung von Lichtquellen über einen DC/DC-Schaltregler mit Strom versorgt wird. Über Lichtquellenindividuelle und parallel zu jeder Lichtquelle liegende Schaltelemente werden die jeweiligen Lichtquellen individuell ein- und ausgeschaltet. Die Schaltelemente werden mit einem Mikrocontroller gesteuert. Über eine Puls-Weiten-Modulation des Ansteuersignals können die Lichtquellen gedimmt werden.

Aus der DE 10 2009 060 791 A1 ist ein Lichtmodul für eine Beleuchtungseinrichtung bekannt, das mehrere in Reihe geschaltete Halbleiterlichtquellen umfasst. Parallel zu jeweils mindestens einer der Halbleiterlichtquellen ist eine der mindestens einen Halbleiterlichtquelle zugeordnete Schaltungsanordnung geschaltet. Im Falle eines detektierten Fehlers einer der Halbleiterlichtquellen wird die defekte Halbleiterlichtquelle durch Mittel zur Überbrückung überbrückt.

US2014218953 offenbart eine Beleuchtungseinrichtung mit mehreren Halbleiterlichtquellen und einer Vorrichtung zum Betreiben der Halbleiterlichtquellen. Die Vorrichtung weist Schaltmittel auf, durch welche die Halbleiterlichtquellen für den Betrieb mit der Vorrichtung gruppenweise aufteilbar sind.

Des Weiteren sind Beleuchtungseinrichtungen für Kraftfahrzeuge bekannt, die Reihenschaltungen von Halbleiterlichtquellen aufweisen, die zur Erzeugung von Animationen, einer Dimmung oder aber Lichteffekten wie beispielsweise einem wischenden Blinker einzeln oder über mehrere Halbleiterlichtquellen hinweg überbrückbar sind. Diese Überbrückung wird mittels elektronischer Schalteinheiten beispielsweise Transistoren durchgeführt. Das Zu- und Wegschalten einzelner Halbleiterlichtquellen stellt damit einen hochtransienten Vorgang dar.

Steuergeräte, die zur Ansteuerung eines Lichtmoduls verwendet werden, können sich durch Vorgaben des Kraftfahrzeugherstellers von Beleuchtungseinrichtung zu Beleuchtungseinrichtung hinsichtlich ihres Strom-/Spannungsverhaltens sowie hinsichtlich ihrer Ausgangskapazität unterscheiden.

Aufgabe der Erfindung ist es daher, den Betrieb eines Lichtmoduls umfassend eine Reihenschaltung von überbrückbaren Halbleiterlichtquellen zu verbessern.

### Offenbarung der Erfindung

Die der Erfindung zu Grunde liegenden Aufgabe wird durch ein Lichtmodul nach dem Anspruch 1 und durch ein Verfahren zum Betreiben eines Lichtmoduls nach einem nebengeordneten Anspruch gelöst. Vorteilhafte Weiterbildungen sind in den Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmal explizit hingewiesen wird.

Die Erfindung ist in Anspruch 1 definiert. Ein Low-Drop-Spannungsregler ist in Reihe mit den Halbleiterlichtquellen geschaltet. Vorteilhaft kann somit mit nur geringem Aufwand erreicht werden, dass beim Überbrücken einer oder mehrerer Halbleiterlichtquellen ein plötzlicher Spannungssprung von mehreren Volt entsteht, gegen den das angeschlossene Steuergerät arbeiten würde. Mithin wird ein entsprechend hoher Strom, der zur Schädigung der nicht überbrückten Halbleiterlichtquellen führen würde, vermieden. Darüber hinaus wird ermöglicht, das Lichtmodul mit einer hohen Anzahl von unterschiedlichen Steuergeräten zu betreiben, ohne dass eine spezielle Anpassung an das jeweilige Steuergerät erfolgen muss.

In vorteilhafter Weise wird insbesondere die Ausgangsspannung des Steuergeräts beobachtet und der Low-Drop-Spannungsregler wird damit in Abhängigkeit von der Ausgangsspannung des Steuergeräts betrieben. Es kann so vorteilhaft auf den Ladezustand des Ausgangskondensators geschlossen werden. Mithin wird der Low-Drop-Spannungsregler in Abhängigkeit von der im aktuellen Ladezustand der Ausgangskapazität des Steuergeräts betrieben.

In vorteilhafter Weise kann mittels der Referenzspannung ein Soll-Wert für die Rückkoppelspannung und damit für die Spannung über die Reihenschaltung der Halbleiterlichtquellen und des Low-Drop-Spannungsreglers vorgegeben werden.

In einer vorteilhaften Ausführungsform wird der Low-Drop-Spannungsregler zur Erzeugung eines Mindest-Widerstandes betrieben, sobald die Gesamtspannung unter einen Mindest-Spannungs-Schwellwert sinkt. Hierdurch wird vorteilhaft erreicht, dass auch bei einer hohen Anzahl von überbrückten Halbleiterlichtquellen eine Mindestspannung an der Reihenschaltung abfällt und so das Steuergerät keinen Fehler detektiert. Der Mindest-Spannungs-Schwellwert ist somit dazu vorgesehen, dem zugeordneten Steuergerät mittels des Mindest-Widerstandes zu signalisieren, dass kein Fehlerfall vorliegt.

In einer vorteilhaften Ausführungsform ist ein Fehler in Bezug auf die Halbleiterlichtquellen ermittelbar. In Abhängigkeit von dem Fehler ist die Referenzspannung derart ermittelbar, dass die Gesamtspannung über die Reihenschaltung der Halbleiterlichtquellen und des Low-Drop-Spannungsreglers einen Fehler-Spannungs-Schwellwert unter- oder überschreitet. Hierdurch wird vorteilhaft ein auf dem Lichtmodul festgestellter Fehler in Bezug auf die Halbleiterlichtquellen durch die Erhöhung der Gesamtspannung oder eine Verringerung der Gesamtspannung dem Steuergerät mitgeteilt. Das Steuergerät ermittelt hierdurch einen Fehler.

In einer vorteilhaften Ausführungsform wird der Low-Drop-Spannungsregler in Abhängigkeit von der Referenzspannung betrieben, eine Spannung, die über dem Low-Drop-Spannungsregler abfällt, ist ermittelbar und die Referenzspannung für den Low-Drop-Spannungsregler wird in Abhängigkeit von der Spannung, die über dem Low-Drop-Spannungsregler abfällt, ermittelt. Damit kann die Spannung, die über der Kette von Halbleiterlichtquellen abfällt, beobachtet werden und die Referenzspannung in Abhängigkeit von dieser Kettenspannung und in Abhängigkeit von der Ausgangsspannung des Steuergeräts ermittelt werden.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von den Patentansprüchen oder deren Rückbeziehung sowie unabhängig von ihrer Formulierung bzw. Darstellung in der Beschreibung bzw. in der Zeichnung. Für funktionsäquivalente Größen und Merkmale werden in allen Figuren auch bei unterschiedlichen Ausführungsformen die gleichen Bezugszeichen verwendet. In der Zeichnung zeigen:
- Figur 1: zeigt eine Beleuchtungseinrichtung für ein Kraftfahrzeug;
- Figuren 2 und 3: zeigen jeweils eine Ausführungsform eines Lichtmoduls mit einem zugeordneten Steuergerät;
- Figuren 4 und 6: zeigen jeweils ein Spannungs-Zeit-Diagramm; und
- Figur 5: zeigt ein schematisches Strom-Zeit-Diagramm.

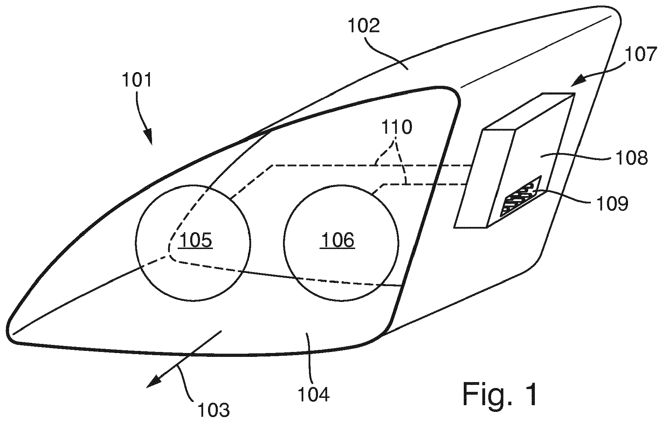

In Figur 1 ist eine Beleuchtungseinrichtung für Kraftfahrzeuge in ihrer Gesamtheit mit dem Bezugszeichen 101 bezeichnet. Die Beleuchtungseinrichtung 101 ist in dem dargestellten Ausführungsbeispiel als ein Kraftfahrzeugscheinwerfer ausgebildet. Selbstverständlich kann die Beleuchtungseinrichtung 101 auch als eine Leuchte oder ähnliches, die am Heck oder seitlich am Kraftfahrzeug angeordnet ist, ausgebildet sein. Insbesondere ist die Beleuchtungseinrichtung 101 ein Blinker für das Kraftfahrzeug. Der Scheinwerfer 101 umfasst ein Gehäuse 102, das vorzugsweise aus Kunststoff gefertigt ist. In einer Lichtaustrittsrichtung 103 weist das Scheinwerfergehäuse 102 eine Lichtaustrittsöffnung auf, die durch eine transparente Abdeckscheibe 104 verschlossen ist. Die Abdeckscheibe 104 ist aus farblosem Kunststoff oder Glas gefertigt. Die Scheibe 104 kann ohne optisch wirksame Profile (zum Beispiel Prismen) als sogenannte klare Scheibe ausgebildet sein. Alternativ kann die Scheibe 104 zumindest bereichsweise mit optisch wirksamen Profilen, die insbesondere eine Streuung des hindurch tretenden Lichts in horizontaler Richtung bewirken, versehen sein.

Im Inneren des Scheinwerfergehäuses 102 sind in dem dargestellten Ausführungsbeispiel zwei Lichtmodule 105, 106 angeordnet. Die Lichtmodule 105, 106 sind fest oder relativ zu dem Gehäuse 102 bewegbar angeordnet. Durch eine Relativbewegung der Lichtmodule 105, 106 zum Gehäuse 102 in horizontaler Richtung kann beispielsweise eine dynamische Kurvenlichtfunktion realisiert werden. Bei einer Bewegung der Lichtmodule 105, 106 um eine horizontale Achse, also in vertikaler Richtung, kann eine Leuchtweitenregelung realisiert werden. Die Lichtmodule 105, 106 sind zur Erzeugung einer gewünschten Lichtverteilung, beispielsweise einer Abblendlicht-, einer Fernlicht-, einer Stadtlicht-, einer Landstraßenlicht-, einer Autobahnlicht-, einer Nebellicht-, einer statischen oder dynamischen Kurvenlicht- oder einer beliebig anderen statischen oder adaptiven Lichtverteilung ausgebildet. Die Lichtmodule 105, 106 erzeugen die gewünschte Lichtfunktion entweder alleine oder in Kombination miteinander, indem die von jedem einzelnen Lichtmodul 105; 107 gelieferten Teillichtverteilungen zu der gewünschten Gesamtlichtverteilung überlagert werden. Die Lichtmodule 105, 106 können als Reflexionsmodule und/oder als Projektionsmodule ausgebildet sein. Selbstverständlich können in dem Scheinwerfergehäuse 102 auch mehr oder weniger als die dargestellten zwei Lichtmodule 105, 106 vorgesehen sein.

An der Außenseite des Scheinwerfergehäuses 102 ist ein Steuergerät 107 in einem Steuergerätegehäuse 108 angeordnet. Selbstverständlich kann das Steuergerät 107 auch an einer beliebig anderen Stelle des Scheinwerfers 101 angeordnet sein. Insbesondere kann für jedes der Lichtmodule 105, 106 ein eigenes Steuergerät vorgesehen sein, wobei die Steuergeräte integraler Bestandteil der Lichtmodule 105, 106 sein können. Selbstverständlich kann das Steuergerät 107 auch entfernt vom dem Scheinwerfer 101 angeordnet sein. Das Steuergerät 107 dient zur Steuerung und/oder Regelung der Lichtmodule 105, 106 bzw. von Teilkomponenten der Lichtmodule 105, 106, wie beispielsweise von Lichtquellen der Lichtmodule 105, 106. Die Ansteuerung der Lichtmodule 105, 106 bzw. der Teilkomponenten durch das Steuergerät 107 erfolgt über Verbindungsleitungen 110, die in Figur 1 durch eine gestrichelte Linie lediglich symbolisch dargestellt sind. Über die Leitungen 110 erfolgt eine Versorgung der Lichtmodule 105, 106 mit elektrischer Energie. Die Leitungen 110 sind durch eine Öffnung im Scheinwerfergehäuse 102 in das Steuergerätegehäuse 108 geführt und dort an die Schaltung des Steuergerätes 107 angeschlossen. Falls mehrere Steuergeräte als integraler Bestandteil der Lichtmodule 105, 106 vorgesehen sind, können die Leitungen 110 und kann die Öffnung in dem Scheinwerfergehäuse 102 entfallen.

Zur besseren EMV-Abschirmung besteht das Steuergerätegehäuse 108 aus einem elektrisch leitfähigen Material, insbesondere aus Metall, vorzugsweise aus Aluminium-Druckguss. Ebenfalls zur besseren EMV-Abschirmung sind die Leitungen 110 abgeschirmt, insbesondere mittels eines die Leitungen 110 umgebenden Metallgeflechts oder eines Metall-Kunststoff-Geflechts. In dem Steuergerätegehäuse 108 ist des Weiteren eine Öffnung vorgesehen, in der ein Stecker-/Buchsenelement 109 angeordnet ist. Über das Stecker-/Buchsenelement 109 kann das Steuergerät 107 mit einem übergeordneten Steuergerät (zum Beispiel einen sogenannten Body-Controller) und/oder einer Energieversorgung des Kraftfahrzeugs (zum Beispiel einer Fahrzeugbatterie) verbunden sein.

Die Lichtmodule 105, 106 der Beleuchtungseinrichtung 101 nutzen als Lichtquellen insbesondere mehrere in Reihe geschaltete Halbleiterlichtquellen, insbesondere Leuchtdioden (LEDs). LED-Scheinwerfer 101, die eine Vielzahl von LEDs aufweisen, finden verstärkt Einsatz. Durch Aus- und Einschalten einzelner LEDs oder einzelner LED-Gruppen können variable Lichtverteilungen erzielt werden. Üblicherweise sind jeweils mehrere LEDs in einer Reihenschaltung (auch Zweig oder Kette) geschaltet.

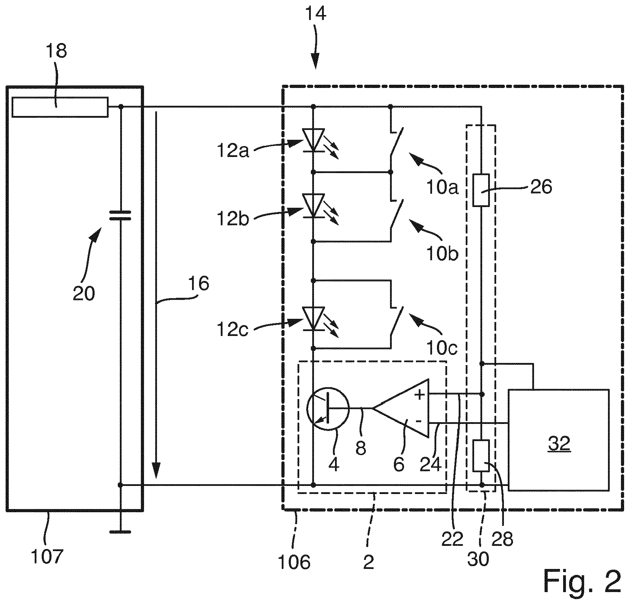

Figur 2 zeigt in schematischer Form das Lichtmodul 106 mit dem zugeordneten Steuergerät 107. Das Lichtmodul 106 umfasst einen Low-Drop-Spannungsregler 2. Der Low-Drop-Spannungsregler 2 umfasst eine Steuereinheit 4 und einen Operationsverstärker 6. Der Operationsverstärker 6 betreibt die Steuereinheit 4 mittels eines Stellsignals 8. Die Steuereinheit 4 ist vorliegend als npn-Bipolartransistor ausgebildet, dessen Basis das Stellsignal 8 zugeführt wird. Die Steuereinheit 4 ist mit einem Kollektor- und einem Emitteranschluss mit einer Anzahl von in Reihe geschalteten, mittels einer jeweiligen Schalteinheit 10 überbrückbaren Halbleiterlichtquellen 12 in Reihe geschaltet. Die Reihenschaltung 14 umfassend die Halbleiterlichtquellen 12 und den Low-Drop-Spannungsregler 2 ist damit an den Ausgang des Steuergeräts 107 geschaltet. Die Ausgangsspannung 16 fällt damit an der Reihenschaltung 14 ab. Das Steuergerät 107 umfasst eine Stromquelle 18 und einen Ausgangskondensator 20.

Dem Operationsverstärker 6 wird eine Rückkoppelspannung 22 und eine Referenzspannung 24 zugeführt. Der Unterschied zwischen den Spannungen 22 und 24 wird mittels des Operationsverstärkers 6 verstärkt und als das Stellsignal 8 ausgegeben. Die Rückkoppelspannung 22 ergibt sich aus einem Mittenabgriff eines Spannungsteilers bestehend aus zwei Widerständen 26 und 28, die parallel zur Reihenschaltung 14 geschaltet sind. Die Widerstände 26 und 28 sind auch als Rückkoppelnetzwerk 30 bezeichenbar. Die Referenzspannung 24 wird in Abhängigkeit von der Rückkoppelspannung 22 von einer Einheit 32 erzeugt. Die Einheit 32 kann beispielsweise als Mikrocontroller ausgebildet sein.

Ist die Ausgangsspannung 16 zu hoch, liegt diese also oberhalb eines Schwellwerts, so wird der Pegel des Stellsignals 8 des Operationsverstärkers 6 erhöht, wodurch die Steuereinheit 4 so angesteuert wird, dass deren Eingangswiderstand steigt, wodurch wiederum die Ausgangsspannung 16 des Steuergeräts 107 reduziert wird.

Über die Beobachtung der Referenzspannung 22 kann die Einheit 32 auf die Ausgangsspannung 16 schließen. Unterschreitet diese Gesamtspannung in Form der Ausgangsspannung 16 einen Mindest-Spannungs-Schwellwert, so wird der Low-Drop-Spannungsregler 2 zur Erzeugung eines Mindest-Widerstands betrieben, was durch eine entsprechende Einstellung der Referenzspannung 24 durchgeführt wird. Die Ausgangsspannung 16 ist auch als Gesamtspannung bezeichenbar. Mit Hilfe des Low-Drop-Spannungsreglers 2 kann also trotz einer überbrückten Halbleiterlichtquelle 12 der Strom durch die Reihenschaltung 14 konstant gehalten werden. Der Low-Drop-Spannungsregler 2 erzeugt beim Schließen einer Schalteinheit 10 mittels des zugeschalteten Widerstandes den Spannungsunterschied und reduziert diesen Spannungsunterschied innerhalb einer Zeitdauer. Es wird somit nicht unmittelbar sondern mittelbar über die Beobachtung der Spannung 16 auf einen Schließvorgang einer Schalteinheit 10 reagiert. Die Zeitdauer kann beispielsweise bei einem pulsweitenmodulierten Spannungs- bzw. Stromsignal zumindest 5 ms betragen. Die Zeitdauer des Herabsetzens des Widerstandes, der über die Stelleinheit 4 abfällt, wird mittels der Einheit 32 vorgegeben.

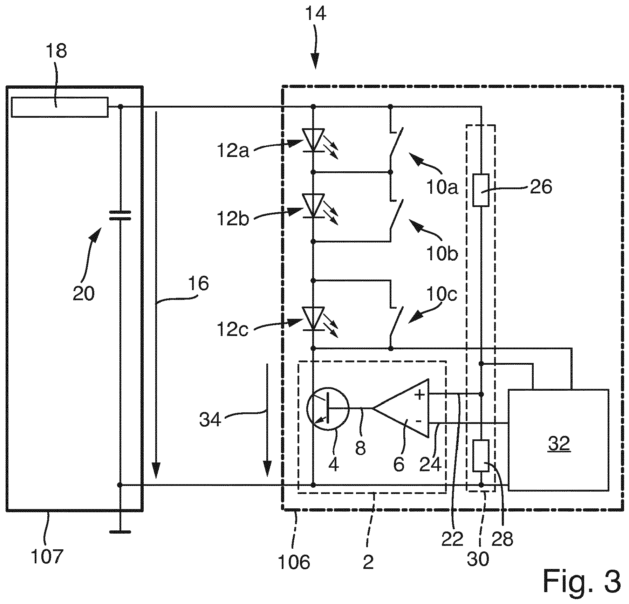

Figur 3 zeigt eine weitere Ausführungsform des Moduls 106. Im Unterschied zu Figur 2 wird der Einheit 32 ein weiterer Abgriff zugeführt, mittels dessen eine Spannung 34, die über dem Low-Drop-Spannungsregler 2 abfällt, ermittelbar ist. Mithin kann die Referenzspannung 24 sowohl in Abhängigkeit von der Ausgangsspannung 16 als auch in Abhängigkeit von der Spannung 34, die über den Low-Drop-Spannungsregler 2 abfällt, ermittelt werden. So ist unterscheidbar zwischen der Spannung 34 und der Spannung, die über der Reihenschaltung von Halbleiterlichtquellen 12 abfällt. Dies ermöglicht eine genauere und schnellere Ermittlung der Referenzspannung 24, womit besser auf ein Schließen einer Schalteinheit 10 geschlossen werden kann.

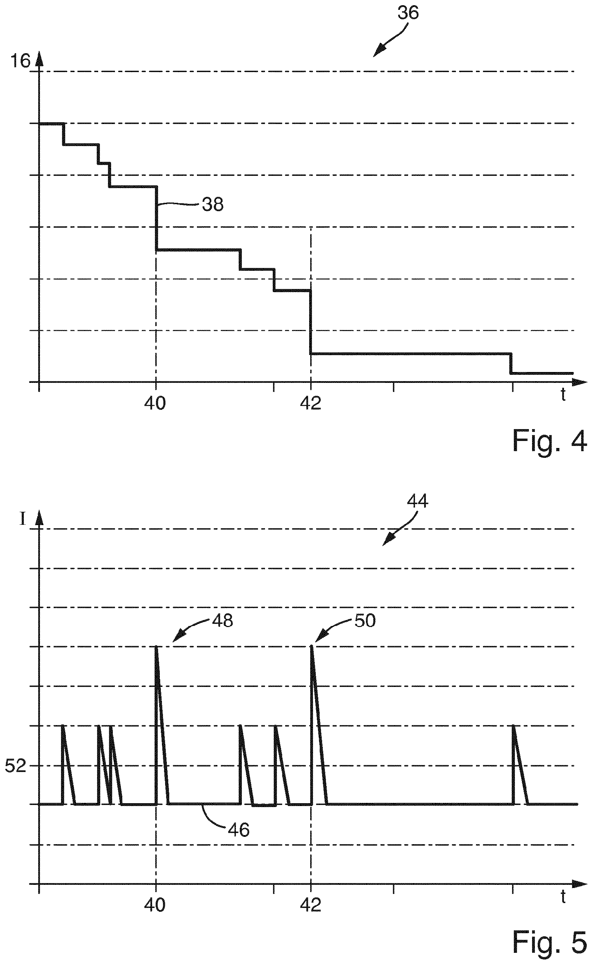

In Figur 4 ist ein schematisches Spannungs-Zeit-Diagramm 36 gezeigt. Es ist die Ausgangsspannung 16 über der Zeit t aufgetragen. Gemäß einem Spannungsverlauf 38 werden einzelne oder mehrere Halbleiterlichtquellen 12 mittels der zugeordneten Schalteinheit 10 überbrückt und das zugeordnete Steuergerät 107 stellt die Spannung 16 entsprechend ein. So werden beispielsweise zum Zeitpunkt 40 gleichzeitig drei Halbleiterlichtquellen 12 überbrückt. Gleiches gilt für den Zeitpunkt 42. Zu den anderen Zeitpunkten wird jeweils nur eine Halbleiterlichtquelle 12 überbrückt. Der Stromverlauf 38 in Figur 4 stellt die Situation dar, bei der die Reihenschaltung von Halbleiterlichtquellen 12 ohne den Low-Drop-Spannungsregler 2 zwischen den Ausgang des Steuergeräts 107 geschaltet ist.

Figur 5 zeigt ein schematisches Strom-Zeit-Diagramm 44. Es ist ein Strom I über der Zeit t aufgetragen. Ein Stromverlauf 46 zeigt den Strom durch eine Reihenschaltung von Halbleiterlichtquellen 12, die direkt an den Ausgang des Steuergeräts 107 ohne den Low-Drop-Spannungsregler 2 angeschlossen ist. Es ergeben sich entsprechend Stromspitzen, wie beispielsweise die Stromspitzen 48 und 50 zu den Zeitpunkten 40 und 42, die sich oberhalb eines Stromgrenzwertes 52 befinden. Für Ströme oberhalb des Stromgrenzwertes 52 wird eine Beschädigung der noch betriebenen Halbleiterlichtquellen 12 erwartet. Im gezeigten Beispiel würde diese erwartete Beschädigung bereits beim Überbrücken von nur einer Halbleiterlichtquelle 12 vorliegen.

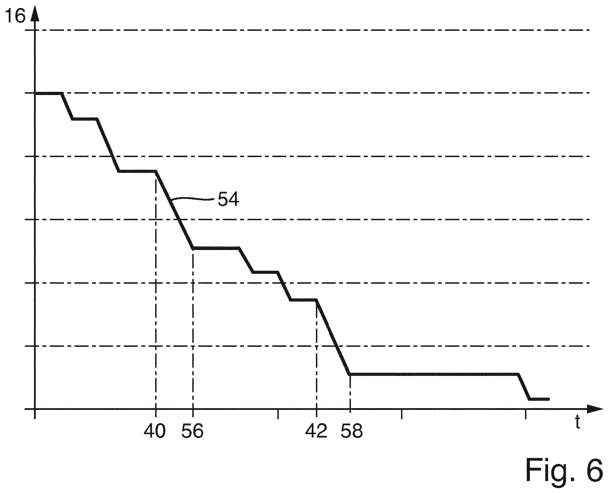

Figur 6 zeigt ein schematisches Spannungs-Zeit-Diagramm, bei dem die Ausgangsspannung 16 über der Zeit t aufgetragen ist. Ein Spannungsverlauf 54 zeigt im Gegensatz zu dem Spannungsverlauf 38 aus Figur 4 die Situation, wie sie bei dem Vorsehen des Low-Drop-Spannungsreglers 2 in Reihe mit den Halbleiterlichtquellen 12 in Zusammenwirken mit dem Regelverhalten des Steuergeräts 107 auftritt. So ergibt sich beispielsweise ausgehend von dem Zeitpunkt 40 bei einer Überbrückung von drei Halbleiterlichtquellen 12 kein abrupter Spannungsabfall, sondern es wird bis zu einem Zeitpunkt 56 die Spannung 60 linear herabgesetzt. Gleiches gilt für die Abschaltung und Überbrückung von drei Halbleiterlichtquellen 12 zum Zeitpunkt 42. Die lineare Herabsetzung ist nur beispielhaft und kann selbstverständlich auch einen nicht-linearen Verlauf annehmen.

Durch ein Schließen einer Schalteinheit 10 erhöht sich die Spannung in der Reihenschaltung 14 von Halbleiterlichtquellen 12 unvermittelt. Durch diesen plötzlich entstehenden Spannungsunterschied wird der Low-Drop-Spannungsregler wie oben beschrieben betrieben und der Ausgangskondensator des zugeordneten Steuergeräts 107 entlädt sich nicht unmittelbar. Durch den in Reihe mit den Halbleiterlichtquellen 12 geschalteten und nach den hier vorgestellten Verfahren betriebenen Low-Drop-Spannungsregler 2 kommt es zu keinem erhöhten Stromimpuls durch die Reihenschaltung von Halbleiterlichtquellen 12.

Ausgehend vom Zeitpunkt 42 wird bis zu einem Zeitpunkt 58 die Spannung linear herabgesetzt. Dies wird dadurch erreicht, dass der Low-Drop-Spannungsregler 2 bei der Erkennung eines Abfalls der Spannung 16 oder der Spannung über die Halbleiterlichtquellen 12 die überbrückte bzw. überbrückten Halbleiterlichtquellen 12 durch einen entsprechend eingestellten Widerstand ersetzt, der innerhalb eines Zeitfensters idealerweise auf Null Ohm herabgesetzt wird. Hierdurch wird garantiert, dass der vom Steuergerät 107 eingestellte bzw. eingeregelte Strom durch die Reihenschaltung 14 den Stromgrenzwert 52 nicht überschreitet.

Die Herabsetzung der Spannung innerhalb einer Reglerzeit von 5 ms ergibt sich aus einer Wiederholfrequenz von 200 Hz. Die Einschaltzeiten der Halbleiterlichtquellen sind dann zwischen 0 und 5 ms je nach gewünschter Helligkeit. Selbstverständlich sind auch höhere Wiederholfrequenzen im Bereich zwischen 300 Hz und 1000 Hz denkbar, womit sich kürzere Reglerzeiten ergeben.

## Patentansprüche

1. Ein Lichtmodul (106) für eine Beleuchtungseinrichtung (101) eines Kraftfahrzeugs mit einem Steuergerät (107) zur Steuerung und/oder Regelung des Lichtmoduls (106), das Lichtmodul (106) umfassend eine Anzahl von in Reihe geschalteten, mittels einer jeweiligen Schalteinheit (10) überbrückbaren Halbleiterlichtquellen (12), **dadurch gekennzeichnet, dass** ein Low-Drop-Spannungsregler (2) in Reihe mit den überbrückbaren Halbleiterlichtquellen (12) geschaltet ist, sodass eine Reihenschaltung (14) die überbrückbaren Halbleiterlichtquellen (12) und den Low-Drop-Spannungsregler (2) umfasst, wobei der Low-Drop-Spannungsregler (3) eine Steuereinheit (4) und einen Operationsverstärker (6) aufweist, und der Low-Drop-Spannungsregler (3) so ausgestaltet ist, dass dem Operationsverstärker (2) eine Rückkoppelspannung (22) und eine Referenzspannung (24) zugeführt wird, wobei ein Unterschied zwischen der Rückkoppelspannung (22) und der Referenzspannung (24) mittels des Operationsverstärkers (6) verstärkt und als Stellsignal (8) ausgegeben wird, wobei der Operationsverstärkers (6) mittels des Stellsignals (8) die Steuereinheit (4) ansteuert, wobei sich die Rückkoppelspannung (22) aus einem Mittenabgriff eines Spannungsteilers des Lichtmoduls (106) bestehend aus zwei Widerständen (26, 28) ergibt, der parallel zur Reihenschaltung (14) geschaltet ist, und wobei ein Microcontroller des Lichtmoduls (106) ausgestaltet ist, die Referenzspannung (24) in Abhängigkeit von der Rückkoppelspannung (22) zu erzeugen,
wobei mittels der Rückkoppelspannung (22) durch den Microcontroller eine Gesamtspannung (16), die über die Reihenschaltung (14) umfassend die überbrückbaren Halbleiterlichtquellen (12) und den Low-Drop-Spannungsregler (2) abfällt, ermittelt ist, und wobei die Referenzspannung (24) in Abhängigkeit von der ermittelten Gesamtspannung (16) erzeugt ist,
wobei die Steuereinheit (4) durch Einstellen der Referenzspannung (24) mittels des Microcontrollers (32) zur Erzeugung eines Widerstandes angesteuert ist, und
wobei der Low-Dropout-Spannungsregler (2) dazu eingerichtet ist, bei Erkennung eines Abfalls der Gesamtspannung (16) oder der Spannung über die überbrückbaren Halbleiterlichtquellen (12) eine überbrückte Halbleiterlichtquelle der überbrückbaren Halbleiterlichtquellen (12) durch einen entsprechend eingestellten Widerstand mittels dem durch die Steuereinheit (4) erzeugtem Widerstand zu ersetzen, der innerhalb eines Zeitfensters idealerweise auf Null Ohm herabgesetzt wird.

2. Das Lichtmodul (106) nach Anspruch 1, wobei die zwei Widerstände (26 und 28) ein Rückkoppelnetzwerk (30) bilden, wobei das Rückkoppelnetzwerk (30) die Rückkoppelspannung (22) erzeugt.

3. Das Lichtmodul (106) nach Anspruch 1, wobei in Abhängigkeit eines ermittelten Fehlers die Referenzspannung (24) derart erzeugt ist, dass die Gesamtspannung (16) einen Fehlerspannungs-Schwellwert unter- oder überschreitet, und der Fehler in Bezug auf die überbrückbaren Halbleiterlichtquellen (12) an die Steuereinheit (4) mitteilbar ist.

4. Das Lichtmodul (106) nach einem der Ansprüche 2 bis 3, wobei eine Spannung (34), die über den Low-Drop-Spannungsregler (2) abfällt, dem Microcontroller zugeführt ist, und wobei die Referenzspannung (24) für den Low-Drop-Spannungsregler (2) in Abhängigkeit von der Spannung (34), die über den Low-Drop-Spannungsregler (2) abfällt, erzeugt ist.

5. Ein Verfahren zum Betreiben eines Lichtmoduls (106) gemäß den Ansprüchen 1 - 4 für eine Beleuchtungseinrichtung (101) eines Kraftfahrzeugs,
- wobei dem Operationsverstärker (2) die Rückkoppelspannung (22) und die Referenzspannung (24) zugeführt wird,
- wobei der Unterschied zwischen der Rückkoppelspannung (22) und der Referenzspannung (24) mittels des Operationsverstärkers (6) verstärkt und als Stellsignal (8) ausgegeben wird und
- die Steuereinheit (4) mittels des Stellsignals (8) angesteuert wird, wobei von dem Microcontroller f32) die Referenzspannung (24) in Abhängigkeit von der Rückkoppelspannung (22) erzeugt wird und
- von dem Microcontroller (32) die Gesamtspannung (16) mittels der Rückkoppelspannung (22) ermittelt und die Referenzspannung (24) in Abhängigkeit der ermittelten Gesamtspannung erzeugt wird, wobei
- durch die Steuereinheit (4) der Widerstand eingestellt wird, durch das Einstellen der Referenzspannung durch Microcontroller, wenn mindestens eine der überbrückbare Leuchtmittel überbrückt ist, und
- wobei der Low-Dropout-Spannungsreoler (2) dazu eingerichtet ist, bei dem Erkennung des Abfalls der Gesamtspannung (16) oder der Spannung über die überbrückbaren Halbleiterlichtquellen (12) einer überbrückten Halbleiterlichtquelle der überbrückbaren Halbleiterlichtquellen (12) durch den entsprechend eingestellten Widerstand zu ersetzen, der innerhalb des Zeitfensters idealerweise auf Null Ohm herabgesetzt wird.

## Claims

1. A light module (106) for an illumination device (101) of a motor vehicle, comprising a control unit (107) for open-loop and/or closed-loop control of the light module (106), the light module (106) comprising a number of semiconductor light sources (12) which are connected in series and can be bridged by means of a relevant switching unit (10), **characterized in that** a low-dropout voltage regulator (2) is connected in series to the bridgeable semiconductor light sources (12), such that a series connection (14) comprises the bridgeable semiconductor light sources (12) and the low-dropout voltage regulator (2), the low-dropout voltage regulator (3) having a control unit (4) and an operational amplifier (6), and the low-dropout voltage regulator (3) being designed such that a feedback voltage (22) and a reference voltage (24) are fed to the operational amplifier (2), with a difference between the feedback voltage (22) and the reference voltage (24) being amplified by means of the operational amplifier (6) and being output as an actuating signal (8), the operational amplifier (6) actuating the control unit (4) by means of the actuating signal (8), the feedback voltage (22) resulting from a center tap of a voltage divider of the light module (106) consisting of two resistors (26, 28), which tap is connected in parallel to the series connection (14), and a microcontroller of the light module (106) being designed to generate the reference voltage (24) on the basis of the feedback voltage (22),
with a total voltage (16), which drops across the series connection (14) comprising the bridgeable semiconductor light sources (12) and the low-dropout voltage regulator (2), being determined by means of the feedback voltage (22) via the microcontroller, and the reference voltage (24) being generated on the basis of the determined total voltage (16),
the control unit (4) being actuated by the reference voltage (24) being adjusted by means of the microcontroller (32) in order to generate a resistance, and
upon recognition of a drop of the total voltage (16) or of the voltage across the bridgeable semiconductor light sources (12), the low-dropout voltage regulator (2) being configured to replace a bridged semiconductor light source of the bridgeable semiconductor light sources (12) with a correspondingly adjusted resistance by means of the resistance generated by the control unit (4), which resistance is ideally reduced to zero ohm within a time window.

2. Light module (106) according to claim 1, wherein the two resistors (26 and 28) form a feedback network (30), and wherein the feedback network (30) generates the feedback voltage (22).

3. Light module (106) according to claim 1, wherein on the basis of a determined error the reference voltage (24) is generated in such a way that the total voltage (16) falls below or exceeds an error voltage threshold value, and the error in relation to the bridgeable semiconductor light sources (12) can be communicated to the control unit (4).

4. Light module (106) according to any of claims 2 to 3, wherein a voltage (34), which drops across the low-dropout voltage regulator (2), is fed to the microcontroller, and wherein the reference voltage (24) for the low-dropout voltage regulator (2) is generated on the basis of the voltage (34) which drops across the low-dropout voltage regulator (2).

5. Method for operating a light module (106) according to claims 1-4 for an illumination device (101) of a motor vehicle,
- wherein the feedback voltage (22) and the reference voltage (24) are fed to the operational amplifier (2),
- wherein the difference between the feedback voltage (22) and the reference voltage (24) is amplified by means of the operational amplifier (6) and output as an actuating signal (8) and
- the control unit (4) is actuated by means of the actuating signal (8), wherein the reference voltage (24) is generated by the microcontroller f32) on the basis of the feedback voltage (22) and
- the total voltage (16) is determined by the microcontroller (32) by means of the feedback voltage (22) and the reference voltage (24) is generated on the basis of the determined total voltage, wherein
- the resistance is adjusted by the control unit (4) by the reference voltage being adjusted by the microcontroller if at least one of the bridgeable light sources is bridged, and
- wherein, upon recognition of the drop of the total voltage (16) or of the voltage across the bridgeable semiconductor light sources (12), the low-dropout voltage regulator (2) is configured to replace of a bridged semiconductor light source of the bridgeable semiconductor light sources (12) with the correspondingly adjusted resistance, which is ideally reduced to zero ohm within a time window.

## Revendications

1. Module d'éclairage (106) pour un dispositif d'éclairage (101) d'un véhicule à moteur avec un appareil de commande (107) pour la commande et/ou régulation du module d'éclairage (106), le module d'éclairage (106) comprenant un certain nombre de sources de lumière à semi-conducteur (12) montées en série, pouvant être court-circuitées au moyen d'une unité de commutation (10) respective, **caractérisé en ce qu'**un régulateur à faible chute de tension (2) est monté en série avec les sources de lumière à semi-conducteur (12) pouvant être court-circuitées, de sorte qu'un montage en série (14) comprend les sources de lumière à semi-conducteur (12) pouvant être court-circuitées et le régulateur à faible chute de tension (2), dans lequel le régulateur à faible chute de tension (3) présente une unité de commande (4) et un amplificateur opérationnel (6), et le régulateur à faible chute de tension (3) est conçu de sorte qu'une tension de rétroaction (22) et une tension de référence (24) est amenée à l'amplificateur opérationnel (6), dans lequel une différence entre la tension de rétroaction (22) et la tension de référence (24) est amplifiée au moyen de l'amplificateur opérationnel (6) et délivrée sous la forme d'un signal de réglage (8), dans lequel l'amplificateur opérationnel (6) commande l'unité de commande (4) au moyen du signal de réglage (8), dans lequel la tension de rétroaction (22) résulte d'un point milieu d'un diviseur de tension (22) du module d'éclairage (106) constitué de deux résistances (26, 28), qui est monté en parallèle par rapport au montage en série (14), et dans lequel un microcontrôleur du module d'éclairage (106) est conçu pour produire la tension de référence (24) en fonction de la tension de rétroaction (22),
dans lequel une tension totale (16), qui chute sur toute l'étendue du montage en série (14) comprenant les sources de lumière à semi-conducteur (12) pouvant être court-circuitées et le régulateur à faible chute de tension (2), est déterminée par le microcontrôleur au moyen de la tension de rétroaction (22), et dans lequel la tension de référence (24) est produite en fonction de la tension totale (16) déterminée,
dans lequel l'unité de commande (4) est commandée par réglage de la tension de référence (24) au moyen du microcontrôleur (32) pour la production d'une résistance, et
dans lequel le régulateur à faible chute de tension (2) est conçu pour remplacer une source de lumière à semi-conducteur (12) court-circuitée des sources de lumière à semi-conducteur (12) pouvant être court-circuitées par une résistance réglée de manière correspondante au moyen de la résistance produite par l'unité de commande (4), qui est réduite idéalement à zéro Ohm pendant une fenêtre temporelle, lorsqu'une chute de la tension totale (16) ou de la tension sur toute l'étendue des sources de lumière à semi-conducteur (12) pouvant être court-circuitées est détectée.

2. Module d'éclairage (106) selon la revendication 1, dans lequel les deux résistances (26 et 28) forment un réseau de rétroaction (30), dans lequel le réseau de rétroaction (30) produit la tension de rétroaction (22).

3. Module d'éclairage (106) selon la revendication 1, dans lequel la tension de référence (24) est produite en fonction d'un défaut déterminé, de telle sorte que la tension totale (16) passe au-dessous de ou dépasse une valeur de seuil de tension de défaut, et le défaut concernant les sources de lumière à semi-conducteur (12) pouvant être court-circuitées peut être communiqué à l'unité de commande (4).

4. Module d'éclairage (106) selon l'une quelconque des revendications 2 à 3, dans lequel une tension (34), qui chute par l'intermédiaire du régulateur à faible chute de tension (2), est amenée au microcontrôleur, et dans lequel la tension de référence (24) pour le régulateur à faible chute de tension (2) est produite en fonction de la tension (34), qui chute par l'intermédiaire du régulateur à faible chute de tension (2).

5. Procédé pour faire fonctionner un module d'éclairage (106) selon les revendications 1-4 pour un dispositif d'éclairage (101) d'un véhicule à moteur,
- dans lequel la tension de rétroaction (22) et la tension de référence (24) est amenée à l'amplificateur opérationnel (2),
- dans lequel la différence entre la tension de rétroaction (22) et la tension de référence (24) est amplifiée au moyen de l'amplificateur opérationnel (6) et délivrée en tant que signal de réglage (8) et
- l'unité de commande (4) est commandée au moyen du signal de réglage (8), dans lequel la tension de référence (24) est produite par le microcontrôleur (32) en fonction de la tension de rétroaction (22) et
- la tension totale (16) est déterminée par le microcontrôleur (32) au moyen de la tension de rétroaction (22) et la tension de référence (24) est produite en fonction de la tension totale déterminée, dans lequel
- la résistance est réglée par l'unité de commande (4), par le réglage de la tension de référence par le microcontrôleur, lorsqu'au moins un des moyens d'éclairage pouvant être court-circuités est court-circuité, et
- dans lequel le régulateur à faible chute de tension (2) est conçu pour remplacer une source de lumière à semi-conducteur (12) court-circuitée des sources de lumière à semi-conducteur (12) pouvant être court-circuitées par la résistance réglée de manière correspondante, qui est réduite idéalement à zéro Ohm pendant la fenêtre temporelle, lorsque la chute de la tension totale (16) ou de la tension sur toute l'étendue des sources de lumière à semi-conducteur (12) pouvant être court-circuitées est détectée.
